# EUROPEAN PATENT SPECIFICATION

(11) **EP 0 707 753 B1**
(45) Date of publication and mention of the grant of the patent: **17.09.1997**
(21) Application number: 94919770.1
(22) Date of filing: 06.07.1994
(51) Int. Cl.: H02K 7/02, F16F 15/315, H02K 7/09

(54) **ENERGY STORAGE AND CONVERSION DEVICES**
VORRICHTUNGEN ZUM SPEICHERN UND UMWANDELN VON ENERGIE
DISPOSITIF DE STOCKAGE ET DE CONVERSION D'ENERGIE

(30) Priority: 06.07.1993 GB 9313946
(43) Date of publication of application: 24.04.1996
(73) Proprietor: British Nuclear Fuels PLC, Risley Warrington Cheshire, WA3 6AS (GB)
(72) Inventor: JENNINGS, Howard Timothy, Risley Warrington Cheshire WA3 6AS (GB); COX, Terence Martin, British Nuclear Fuels Plc, Warrington Cheshire WA3 6AS (GB)
(74) Representative: Jackson, Richard Eric
(86) International application number: GB9401459
(87) International publication number: WO9502270

(56) References cited:
- EP-A- 0 072 747
- DE-A- 3 937 687
- US-A- 4 065 189
- PROCEEDINGS OF THE 25TH INTERSOCIETY ENERGY CONVERSION ENGINEERING CONFERENCE: RENO 12-17 AUG. 1990, vol.3, 1990 pages 469 - 474 R. B. ZMOOD ET AL. 'Improved operation of magnetic bearings for flywheel energy storage system' seepage 470, left column,paragraph 3 - page 474, left column, paragraph 2; figures 1, 2, 3
- PATENT ABSTRACTS OF JAPAN vol. 10, no. 357 (M-540) 2 December 1986 & JP,A,61 153 014 (HITACHI) 11 July 1986
- PATENT ABSTRACTS OF JAPAN vol. 15, no. 384 (P-1258) 27 September 1991 & JP,A,03 154 108 (MATSUSHITA ELECTRIC) 2 July 1991

## Description

The present invention relates to energy storage and conversion devices.

Flywheels are well known devices which can receive and store energy as kinetic energy and can release energy for conversion into other forms when required by a user system. In the prior art a number of flywheel systems are known in which the flywheel comprises a rotor in an electric motor/generator system. Examples of such systems are described in prior patent specifications EP0191225B, FR2614367 and US5124605. In such systems the means employed for suspending the rotor, when rotating, relative to the stator are not ideal. Such known systems, eg in EP 0191225B, employ active magnetic bearings using a discrete position transducer which can be a limiting feature of the system since such transducers have an upper temperature limit of operation, a discrete physical size and the space occupied by the transducer reduces the space available for the control electromagnet(s) and therefore the force which can be exerted on the rotor being suspended.

Furthermore, the rotor in such known systems has not been of ideal configuration and has therefore not lent itself to efficient suspension by active electromagnetic bearings when required to rotate at high speeds.

Electromagnetic bearings for suspending rotating objects are known from US-A-4065189 and DE-A-3937687. Further, EP-A-0072747 discloses an energy conversion and storage device which comprises a
rotor comprising a tubular body portion and a stator comprising one or more electric coils whereby electrical energy may be applied to and extracted from the device when the rotor is rotating relative to the stator the stator being disposed within the rotor co-axially therewith and means for electromagnetically suspending the rotor whilst rotating relative to the stator, wherein the said suspension means includes active electromagnetic bearings at least one of which comprises at least one electromagnet comprising an energising coil which also functions as a control coil for controlling suspension of the rotor and means electrically connected to the control coil for sensing a parameter related to the position of the rotor and relative to the electromagnet.

With the foregoing in mind, the present invention provides an energy conversion and storage device according to the pre-characterising part of claim 1 hereinafter, characterised in that the means for sensing, which does not form a separate transducer, includes means for monitoring voltage across and current through the control coil.

In addition the said means for sensing may include means for monitoring inductance of the control coil.

The said rotor may be formed of a composite of fibre-reinforced material and magnetic material embedded within the fibre-reinforced material.

The said stator may extend along at least a major part of the length of the body portion of the rotor.

The body portion of the said rotor may have a length (along its axis) which is greater than its widest diameter.

The body portion of the rotor may be formed in the manner described in another copending Patent Application WO 94/06193 by the present applicant entitled 'A Rotor' wherein magnetic material is disposed within and between layers of reinforcing fibres in fibred reinforced plastics material. As described in the said Application, the magnetic material is desirably a material which can be obtained in powder form and which can be magnetised by high magnetic fields. Desirably, the magnetic material is resistant to demagnetising forces. The magnetic material may be a rare earth magnetic material, eg cobalt-samarium or neodymium-boron. The fibre reinforced material of the rotor may comprise a known fibre reinforced polymeric material the polymeric matrix of which may be a cold setting, thermosetting or thermoplastic material. The polymeric material may comprise one or more of epoxy resins, polyester resins, Friedel Crafts resins, polyimides, polyether sulphones, and polyether ketones (PEEK) optionally together with known additives such as hardeners, fillers, anti-oxidants and the like. The reinforcing fibres may comprise one or more of carbon, glass, boron, polyamide, polyaramid and polyolefin fibres.

The loading of the magnetic material within the fibre reinforced material may, as described in copending Patent Application WO-A-95/02269 by the present Applicant, vary throughout the matrix of the fibre reinforced material whereby the average mass per unit volume of the rotor body portion decreases radially with distance from the axis of the structure.

As described in WO 94/06193, the rotor body portion preferably comprises an initial layer of windings of fibres, at least one intermediate layer of windings of fibres superimposed on the initial layer to define helical spaces therebetween, magnetic material powder in the spaces, and an outer layer of windings of fibres superimposed about the intermediate layer(s) at a relatively low helix angle.

Such a rotor may be manufactured by a method including the steps of:
a) winding on to a mandrel an initial layer comprising uncured fibres impregnated by a thermosetting resin;
b) winding at least one intermediate layer comprising uncured resin-impregnated fibres about the initial layer so as to define helical spaces between the fibres of the intermediate layer;
c) disposing a mixture comprising unmagnetised magnetic material powder and an uncured resin matrix material in the spaces;
d) winding an outer layer comprising uncured resin-impregnated fibres about the intermediate layer;
e) applying a magnetic field to align the magnetic material powder in a required orientation whilst the resin is in the liquid state prior to gelling and during the gelling process;
f) heating the resin to a curing temperature;
g) cooling the resin, and
h) magnetising the magnetic material powder with an electric coil.

The stator in the device according to the present invention may be formed using a substrate comprising a die cast or sintered or extruded or moulded tube or cylinder. The substrate may comprise ironless metallic or polymeric material. The substrate may contain no magnetic material or alternatively may comprise non-magnetic material coated with powdered iron-containing material. The electric coil(s) may be applied to the substrate during the manufacture of the substrate or afterwards. The electric coil(s) may be formed on the substrate by any suitable known technique such as welding, chemical bonding or by deposition by printing eg using photolithographic techniques.

Desirably, the coils of the stator are able to accept very high currents. Avoidance of iron in the stator may assist in such acceptance. However, ironless stators are inefficient. The stator may have means associated therewith by which iron, eg particles, suspended in a pumpable fluid, eg an inert oil, may be injected into or removed from a cavity within the stator whereby the permeability of the stator may be varied according to the required state of energisation of the device.

The rotor and stator in the device according to the present invention are desirably contained in an enclosure defining a chamber which may be evacuated preferably to a high vacuum state, eg 10⁻⁴ Nm⁻² (10⁻⁶ Torr), during use to minimise molecular drag upon the rotor and the parasitic energy losses produced thereby. The chamber may include a molecular ion pump including an electrostatic arrangement by which residual molecules may be accelerated toward and through a semi-permeable membrane and trapped in a region of the chamber behind the membrane. The membrane may comprise a microporous material which allows gas molecules eg 0₂, N₂ and CO₂ through at high speed but does not allow back transmission at low speeds.

Alternatively, a semi-permeable membrane may be provided in the space between the rotor and the enclosure. Such a membrane may be penetrated in use by residual gas molecules projected toward the membrane by the rotary action of the rotor and thereafter trapped in the region between the membrane and the enclosure inner wall. The membrane may conveniently be corrugated to increase the probability of molecules being projected through the membrane.

The device according to the present invention may include a hollow conduit through which coolant fluid may be passed to remove heat generated during use. The conduit may comprise a hollow shaft located substantially on the axis of the stator and may extend between the respective facing end walls of the enclosure.

The said enclosure may be a casing, eg 5mm to 50mm thick, formed using high strength aluminium or an alloy thereof optionally reinforced with fibre over-windings eg of polyaramid. The inner wall of the enclosure may comprise means to arrest the material of the rotor in the event that the rotor crashes into the enclosure following malfunction during use. The said casing inner walls may carry skid rings or may contain a charge of a material which absorbs kinetic energy by changing its state, eg a liquid such as water which is vaporised, or a solid such as vermiculite.

In order to detect an impending failure of the rotor in the device according to the present invention the device may include means for monitoring the temperature in the said chamber or of the rotor and/or by monitoring the stress patterns developed in the body of the rotor. Fibre-optic guides may be used in a known way to monitor remotely temperatures or stress patterns of the rotor.

Where the detected temperature or detected stress level is unacceptably high the input electrical energy may be automatically shut-off whereby the speed of the rotor is allowed to fall to an acceptable level.

The coil(s) of the stator may be connected to an external switching circuit which allows the device according to the present invention to function as an electric motor, the switching circuit allowing input electrically energy to be applied to the coils to be stored as kinetic energy by the rotor. When the device functions as a generator the switching circuit allows electrical energy to be extracted from the coils. Where impending failure of the rotor is detected, the kinetic energy of the rotor may be rapidly extracted by switching of the device to its generator mode and by connection of the coils of the stator to a high resistance electrical load.

The device may comprise feedback means from the output circuit to the power inputs of the electromagnetic bearings whereby energy derived from the rotor is employed to power the electromagnets of the bearings.

The rotor and the stator may further include magnet, eg soft iron, portions facing one another which are of similar polarity whereby the portions provide passive magnetic bearings for suspension of the rotor at low speeds.

The said tubular body portion of the rotor may comprise a tube which is a right circular cylinder of uniform cross-section although it could also comprise a tube whose cross-sectional area varies along it length or part of its length eg at its end regions only. The said body portion may have a single frusto-conical envelope or back-to-back frusto-conical envelope portions in longitudinal cross-sectional. Alternatively, the said portion may have a longitudinal cross-sectional shape in which the outer diameter is constant but the inner diameter varies either from one end of the body portion to the other or from the ends to the centre of the body portion. Desirably, the gap between the rotor and stator is substantially constant along the length of the said body portion of the rotor even when the cross-sectional area of the latter varies. Desirably, the arrangement of the rotor and stator is such that the magnetic fields generated in use extend substantially orthogonally to the axis of the rotor.

The said active bearings may comprise at least one radial bearing and at least one thrust bearing. The rotor may incorporate ferromagnetic material, eg soft iron, at one or both of its peripheral regions facing one or more electromagnets of an active bearing to facilitate the production of suitable suspension control forces between the electromagnets and the rotor.

Desirably, the active electromagnetic bearings in the device according to the present invention each comprise electromagnets and servo-control loops to stabilise the suspension produced thereby as described in pur copending patent applications EP549,911A or in our copending patent application EP549,912A.

Thus, as described in EP 549,911A, one or more of the active electromagnetic bearings for controlling the suspension of the rotor in the device according to the present invention may include an electromagnet including an inductive control coil, a source of electric power for the electromagnet which source includes a controllable electric supply device capable of delivering a controlled electric supply to the coil of the electromagnet, a control signal producer for producing an error control signal in response to an incremental change in a parameter related to the position of the rotor relative to the electromagnet and a negative feedback control loop for feeding an error control signal generated by the control signal producer to the electric supply device to adjust the electrical supply to the electromagnet so as to stabilise the suspension of the object relative to the electromagnet, wherein the said control signal producer includes means for detecting the component V_{L} of voltage across the coil of the electromagnet which is due to pure inductance L of the electromagnet, means for detecting the current i flowing through the coil of the electromagnet, means for deriving from the detected value of V_{L} and the detected value of i opposing signals and means for balancing the opposing signals whereby an error control signal generated by the control signal producer represents a deviation from the perfect balance of the said opposing signals and causes a correction signal to be applied by the electrical supply to restore the balance.

As described in EP 549,911A balancing of the said opposing signals may provide one or more of proportional and derivative control of the suspension of the rotor. In such forms of control the restoring force required to balance a perturbation caused by a random disturbance to the suspension of the rotor is proportional respectively to the relative position of the rotor or to the rate of change of the relative position of the rotor.

The said opposing signals may comprise a signal proportional to or representing the measured value of V_{L} which has been integrated with respect to time and balanced against a signal proportional to or representing the measured value of i to give proportional control.

Alternatively, or in addition, the said opposing signals may comprise a signal proportional to or representing the measured value of V_{L} balanced against a signal which is the time derivative of a signal proportional to or representing the measured value of i to give derivative control.

Thus, the required form of control is obtained by deriving opposing signals by suitable integration or differentiation with respect to time of one of the signals representing V_{L} and i and comparing it with the other.

Where two or more types of control, eg proportional and derivative control, are required to be provided together the apparatus according to the present invention may comprise a plurality of parallel circuits or loops for generating the respective pairs of opposing signals (derived from V_{L} and i) employed to provide an error control signal to give the required form of feedback control.

The said electromagnet may comprise in its most usual form a magnetic core on which an inductive coil is provided (through which current is supplied to energise the electromagnet). However, the electromagnet may alternatively be an inductive coil without a magnetic core.

The electric supply device may comprise a controlled power amplifier circuit connected to a fixed voltage source, thereby delivering a controlled direct current of a controlled level to the coil of the electromagnet.

The amplifier of the said amplifier circuit is preferably a high gain amplifier and may be an amplifier of any one of classes A, B, C, D and E. Preferably, the gain of the amplifier is greater than 200, desirably greater than 500.

The parameters V_{L} and i may be measured by a processing circuit connected directly to the respective terminals of the control coil and these parameters are preferably measured in this way.

The present invention therefore allows proportional control of the electromagnetic suspension of a rotor by one or more electromagnet to be achieved without the use of separate transducers, ie without transducers not physically connected to the control coil(s) as in the prior art. Such proportional control provides stiffness to oscillations of the rotor about its mean position caused by fluctuations in the power supply. High stiffness implies that little movement will occur when an oscillating force is applied (assuming the frequency is not close to the resonant frequency of the system).

For example, a processing circuit for proportional control may comprise an operational amplifier having its inputs provided by resistive connections to the coil terminals; the operational amplifier may be connected to provide an output to an integrator whose output in turn forms one input to a further operational amplifier having another input provided by a resistive connection to the electromagnet coil, the output of the further operational amplifier providing an error control signal for the electric supply device, eg power amplifier circuit, providing current supply to the coil. An example of the construction and operation of such a circuit is described in further detail below.

As illustrated in more detail below, where such a circuit is connected to the terminals of the coil to measure the values of voltage across and current through the coil, so-called derivative control by ensuring that a positive component of current exists at the output of the circuit, another desirable known kind of control, is additionally achieved in which there is an approximately linear relationship of positive slope between the total force acting upon the suspended object and the time derivative of the relative position of the object.

Such derivative control provides desirable damping to oscillations of the object about its mean position caused by random disturbances to the suspension of the rotor. High damping implies that little velocity will occur when an oscillating force is applied.

In a number of systems it is desirable to provide both stiffness and damping of random oscillations. A lower mechanical impedance results from higher stiffness and/or damping.

A preferred alternative way of achieving derivative control in addition to the aforementioned proportional control in apparatus according to the present invention is as follows. A signal representing the measured value of the parameter V_{L} defined above is balanced against a signal representing the measured value of the parameter di/dt where i is the current through the coil and any difference between the balanced signals is employed as an error control signal in a feedback loop and applied, together with the aforementioned error control signal, to the electrical supply to the coil. Thus, it is preferred to have in parallel with the aforementioned negative feedback control loop providing proportional control an additional negative feedback loop providing derivative control in the manner described. Such derivative control together with the aforementioned proportional control may be achieved without the use of separate transducers.

Thus, as well as providing proportional and derivative control of the electromagnetic suspension of the rotor the present invention allows the problems associated with separate transducers as described hereinbefore to be avoided. Electromagnetic control of the suspension of an object may be achieved at higher temperatures which could otherwise harm the separate transducers as used in the prior art and greater electromagnetic control force per unit area may be obtained. As the measurement system can be formed by using less discrete parts, suspension control may be achieved more cheaply and more reliably than with prior art systems.

As described in EP 549,912A, one or more of the active magnetic bearings for controlling the suspension of the rotor in the device according to the present invention may include (in addition to or as an alternative to the arrangement described in EP 549,911A) an electromagnet including an inductive control coil, a source of electric power for the electromagnet which source includes a controllable electric supply device capable of delivering a controlled electric supply to the coil of the electromagnet, a control signal producer for producing an error control signal in response to an incremental change in a parameter related to the position of the rotor relative to the electromagnet, and a negative feedback control loop for feeding an error control signal generated by the control signal producer to the electric supply device to adjust the electrical supply to the electromagnet so as to stabilise the suspension of the rotor relative to the electromagnet wherein, connected in series with the control coil of the electromagnet is a second coil so that in use the same current flows through the control coil and the second coil and a resonant circuit is formed by a capacitor connected to the second coil or to a third coil which is in a mutually inductive relationship with the second coil so that the second and third coils act as the primary and secondary coils of a transformer and there is also included means for injecting into the circuit containing the control coil an a.c. signal of constant peak voltage amplitude and having a frequency within the resonance peak of the resonant circuit. The impedance or inductance of the control coil varies with any incremental change in the distance separating the electromagnet and the suspended object resulting in a varying current component at the a.c. frequency. The resonant circuit provides means for detecting only the a.c. component of the current through the control coil, the amplitude of the a.c. component of current being sensed by measuring, by an amplitude detector, the amplitude of the alternating voltage across a component, eg the capacitor, of the resonant circuit.

Where the said second coil is itself in the resonant circuit the said amplitude detector requires isolation from the d.c. components in the second coil and this may be provided by connecting the respective leads to the said amplitude detector through capacitors.

Where the said second coil is employed together with a third coil as a transformer the a.c. signal injected through the second coil (or primary coil of the transformer) induces a voltage alternating at the same frequency to appear across the third coil (or secondary coil of the transformer). The induced voltage is a measure of the varying a.c. component of the current flowing through the control coil at the applied frequency.

The amplitude of the alternating voltage detected by the said amplitude detector may be compared in an error detector with a reference signal comprising a desired mean level, and the error signal comprising variations between the measured amplitude and the desired mean level may be integrated in an integrator and thereafter employed as a control signal in a closed negative feedback loop (in parallel with aforementioned loop) connected to the aforementioned controllable electric supply device, eg power amplifier circuit, to adjust the electrical supply to the control coil to maintain the inductance at a desired mean level.

The said injected a.c. signal may be applied as an input to the circuit of the controllable electric supply device and thereby superimposed upon the nominally d.c. output of that device supplied to the control coil. Desirably, although not essentially, the said resonant frequency is greater than the normal audio range and is preferably in the range 15 to 25 kHz, eg 20 kHz.

It can be shown that the control of position of the object by measurement of the inductance of the control coil in the manner described provides so-called integral control of the suspension of the object which is another known desirable kind of control in which the relationship between the total force acting upon the object and the time integral of the incremental distance moved by the object is a linear relationship of positive slope.

Since the measurement of inductance in the manner described may be carried out essentially by connecting a second coil to the control coil the use of a separate transducer may again be avoided. Thus, so-called PID control, which is a combination of proportional, integral and derivative controls, of the rotor suspension may be achieved without the need for separate transducers, ie without transducers not connected to the control coil.

The apparatus according to the present invention may include a plurality of electromagnets each controlled in the manner of the present invention. For example, a pair of electromagnets working together may be employed to control the suspension of an object in one dimension. Control of such a pair of electromagnets may be achieved by providing a controllable electric supply device connected to each electromagnet, a control signal producer and a feedback loop from the control signal producer to the electric supply device all as described hereinbefore.

An active electromagnetic bearing for a rotor constituting the object being suspended may comprise two pairs of electromagnets controlled in the manner described, the members of each pair working together to control one dimensional suspension, the overall bearing providing two dimensional suspension.

A complete suspension system for a shaft may comprise two or more such active bearings acting radially upon the rotor and one active thrust bearing acting upon an end of the rotor.

Use of a device according to the present invention advantageously allows the problem of the restriction on the choice of location of separate transducers to be avoided.

Where a plurality of electromagnets in each active bearing are employed these may be formed by the provision of the electromagnet coils on different portions of a common core in a known manner. The core may be shaped and laminated in known manner. For example, it may be a solid ring shape with the rotor outside the ring but co-axial with the ring. The ring shape may have projections facing toward the axis some or all of the projections carrying the control coils. The core may be one of the other shapes well known in this field.

In a device according to the present invention comprising two electromagnets each having a feedback loop controlling a parameter relating to the relative position of the rotor, the control signal producer for producing an error control signal for each loop may comprise a single circuit common to the feedback loops associated with both electromagnets. The control signal producer may have an output which is applied as a negative signal to the electric supply device of one electromagnet and as a positive signal to the electric supply device of the other electromagnet and vice versa (as appropriate). The output from the common circuit for each feedback loop may be applied in conjunction with an error control signal from a control signal producer dedicated to the control coil of the electromagnet with which it is associated.

The electric supply device for delivering current to the two electromagnets may comprise a common power amplifier driving two transistor devices each connected to one of the electromagnets and to a separate voltage source, the two voltage sources being of opposite polarity whereby the current changes applied to the two coils are equal and opposite. In this case only one feedback loop and error control signal is required as an input to the power amplifier.

Embodiments of the present invention will now be described by way of example with reference to the accompanying drawings, in which:
Figure 1 is a cross-sectional side elevation of a rotor flywheel arrangement.
Figure 2 is a circuit diagram of an electromagnet control coil circuit used in the active bearings in the arrangement shown in Figure 1.
Figure 3 is a circuit diagram of an additional feedback loop circuit which may be employed in conjunction with the feedback loop in the circuit shown in Figure 2;
Figures 4 and 5 are circuit diagrams of alternative arrangements for the feedback loop shown in Figure 3;
Figure 6 is a block circuit diagram of a control circuit including two active electromagnets for controlling the suspension of the rotor shown in the arrangement of Figure 1;
Figure 7 is a circuit diagram of an alternative circuit including two active electromagnets for controlling the suspension of the rotor in the arrangement of Figure 1;
Figure 8 is a circuit diagram of a further electromagnet control circuit which may be used in the active bearings in the arrangement shown in Figure 1.

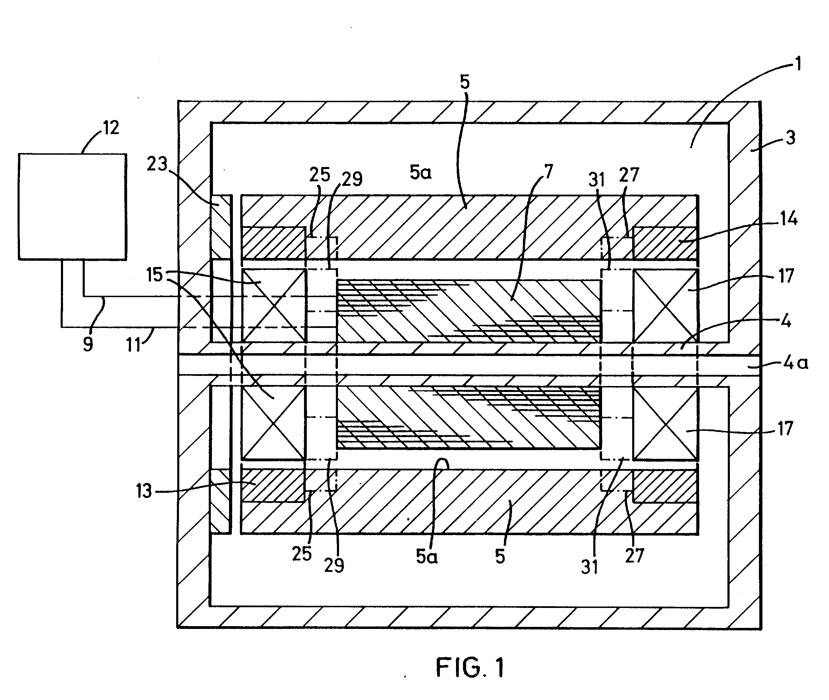

As shown in Figure 1, a vacuum chamber 1 is enclosed by a drum shaped casing 3. A tubular shaft 4 is fitted between the ends of the casing 3 and extends along the axis of the casing 1. A cylindrical tubular rotor 5 is suspended in the chamber 1 co-axial with the tubular shaft 4. The rotor 5 comprises a fibre reinforced composite material and a magnetic material for example cobalt samarium. A stator 7 is mounted on the shaft 4 between the shaft 4 and the rotor 5. The stator 7 comprises a series of permanent magnets and includes also one or more electrical coils in contact with the permanent magnets which coils are connected to conducting leads two of which, leads 9 and 11, having insulating coatings (not shown) are fitted through one end of the casing 3 and lead to an external circuit 12.

The rotor 5 incorporates at its ends rings 13, 14 of soft iron whose inner surfaces form part of the inner surface 7a of the rotor 5 facing the stator 7. Electromagnet systems 15, 17 are mounted on the shaft 4 adjacent to the ends of the stator 7 and face the rings 13, 14 respectively. Each electromagnet system comprises a common rectangular cross-sectional magnetic core ring and four active coils mounted equiangularly around the core. Each coil is connected to external conducting leads which are in turn connected to external circuits respectively which energise the coils of the electromagnet systems 15, 17. The external circuits also monitor and detect parameters which provide servo-control of the suspension of the electromagnet systems 15, 17 relative to the iron rings 13, 14 in the manner described in our EP 549,911A and EP 549,912A. The electromagnet systems 15, 17 and the rings 13, 14 thereby provide radial active magnetic bearing suspension of the rotor 5 about the stator 7. An active magnetic bearing system 23 adjacent to the end of the rotor 5 provides a thrust bearing which locates the rotor 5 in its required position on the axis of the shaft 4.

Magnetic rings 25, 27 formed on the inner surface of the rotor 5 may optionally be provided facing magnetic rings 29, 31 of similar polarity (of the rings they face) on the outer surface of the stator 7. The rings 25, 27, 29, 31 provide passive magnetic bearings to suspend the rotor 5 at low speeds.

Heat generated within the arrangement shown in Figure 1 may be removed by passing a coolant, eg water, along the inside 4a of the tubular shaft 4.

In use, the arrangement shown in Figure 1 may operate in either an electric motor or an electric generator mode. When the arrangement is acting as a motor the circuit 12 is switched whereby electrical energy is provided as an input to the coils of the stator 7 whereby the rotor 5 is caused to rotate. The rotational speed of the rotor 5 may be very high, eg 100,000 to 200,000 revolutions per minute. When the arrangement is acting as a generator the rotation of the rotor 5 causes induction of a voltage in the coils of the stator 7 which is extracted as external energy via the circuit 12. The extracted voltage waveform may be converted in a known way, eg by smoothing, to a form which is suitable for use in an external load, eg brushless dc motor.

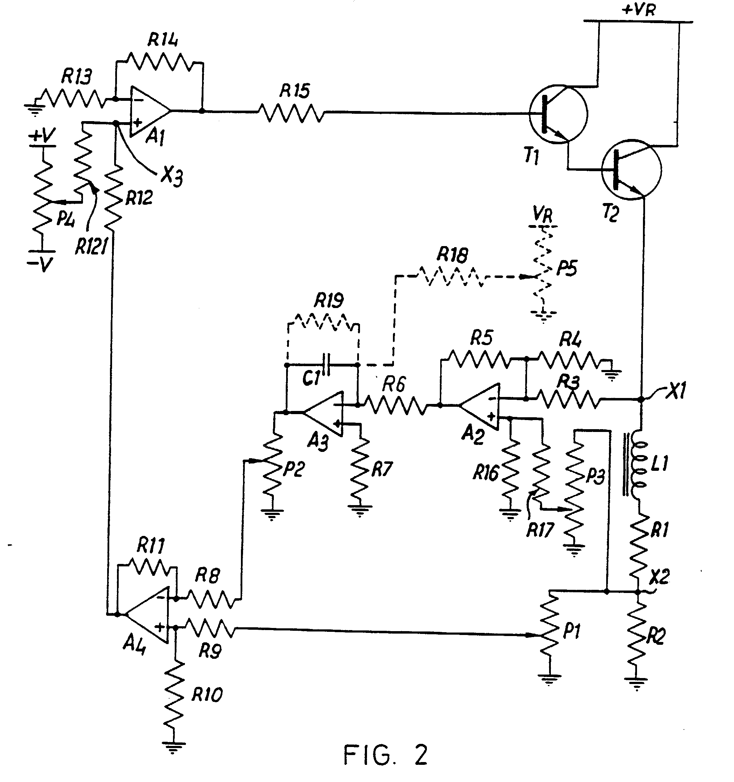

The control circuit shown in Figure 2 measures by two connections across the terminals of a control coil of an electromagnet used in an active bearing the parameter V_{L}, integrates this to form ∫V_{L}dt and balances this term with a term K₃i to provide proportional control and optionally also derivative control in the manner described in EP549,911A.

Considering Figure 2 in more detail, the coil of an electromagnet controlling the suspension of the rotor 5 (Figure 1) is represented by an inductance L1 in series with the coil's own resistance R1, the coil having terminals X1 and X2. The coil is supplied at its terminal X1 with a nominally or controllably fixed level d.c. supply by a high gain amplifier Al driving through a resistor R15 a Darlington pair of transistors T1 and T2 connected to a supply voltage rail +V_{R}, T2 being connected to the coil at terminal X1. The terminal X1 of the coil is connected through a resistor R3 to one input terminal of an operational amplifier A2 the other input terminal of which is earthed through a resistor R16. The positive end of resistor R16 is also connected through a resistor R17 to the variable potential contact of a potentiometer P3 the positive end of which is connected to the other terminal X2 of the coil and the negative end of which is earthed. The terminal X2 of the coil is also connected to earth through a resistor R2 and to the positive end of a potentiometer P1, the negative end of which is earthed. A resistor R5 is connected between the output terminal of the amplifier A2 and the input terminal to the amplifier A2 from the resistor R3 which terminal is connected to earth through a resistor R4. The output of the amplifier A2 is connected through a resistor R6 to form one input terminal to an operational amplifier A3 the other input terminal of which is connected to earth through a resistor R7. A capacitor C1 is connected between the output of the amplifier A3 and the input of the amplifier A3 which is applied from the resistor R6. The output terminal of the amplifier A3 forms the positive end of a potentiometer P2 the negative end of which is earthed. The potentiometer P2 has a variable potential contact which is connected through a resistor R8 to form one input terminal of an operational amplifier A4. The potentiometer P1 has a variable potential contact which is connected through a resistor R9 to form the other input terminal of the amplifier A4, that terminal also being connected to earth through a resistor R10. A resistor R11 is connected between the output of the amplifier A4 and the input to the amplifier A4 from the resistor R8. The output terminal of the amplifier A4 is connected, to form a feedback loop, through a resistor R12 to one input terminal X3 of the amplifier A1, the other input terminal of the amplifier Al being connected to earth through a resistor R13. The input to the amplifier A1 from the resistor R12 is connected through a resistor R121 to the variable potential contact of a potentiometer P4, the positive end of which is at a positive potential +V and the negative end of which is at a negative potential -V. A resistor R14 is connected between the output of the amplifier A1 and its input from the resistor R13.

The circuit component values are chosen so that the output of the amplifier A2 is due to pure inductance of the coil.

The output of amplifier A2 is integrated by the integrator comprising amplifier A3 and capacitor C1 and resistor R6 and a selected fraction of the signal representing the integrated output is balanced against an input representing the current through the coil obtained by selection of circuit component values.

Any output from amplifier A4 is therefore due to a difference between the integral of the component V_{L} of V due to pure inductance and a chosen proportion of the resistive component of V and this output is employed as an error control signal via R12 and is applied to the input terminal X3 of amplifier A1, the terminal also being connected to a reference voltage obtained from the potentiometer P4. The value of resistor R14 is high compared with resistor R13 to make amplifier A1 have a high gain but is limited to a maximum of 1MΩ to ensure that stability of operation of the circuit containing amplifier Al is facilitated.

The circuit shown in Figure 2 provides proportional feedback control of the suspension of the rotor 5. In order to provide additionally derivative control of the suspension of the object, a positive component of current can be provided through the circuits comprising the amplifiers A2 and A3 in Figure 2. This condition can be achieved by optionally adding the resistor R19 shown as a dashed line in Figure 2, in parallel with the capacitor C1. Alternatively, the condition may be achieved by offsetting the potentiometer P3 to provide the current signal at the output of amplifier A2 and adding a resistor R18 and potentiometer P5, shown dashed in Figure 2, to offset the steady state component of the output of amplifier A2. Where resistor R18 and potentiometer P5 are employed in this way potentiometer P4 is not required.

In the circuit shown in Figure 2 the feedback loop comprising the portion of the circuit between terminals X1 and X2 on the one hand and terminal X3 on the other hand will hereinafter be referred to as "Circuit Q1".

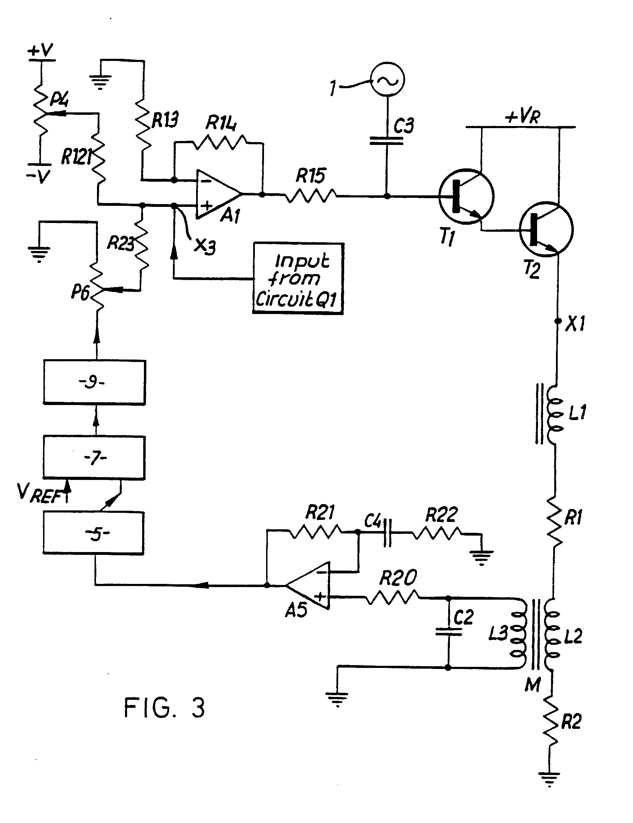

A further feedback loop which may optionally be employed to provide object position control by inductance measurement in addition to control by Circuit Q1 is the circuit shown in Figure 3.

In Figure 3, the amplifier A1, transistors T1 and T2, the coil of a control electromagnet represented by its inductance L1 and resistance R1, resistors R2, R13, R14, R15 and potentiometer P4 and resistor R121 are the same as the items having the same reference symbols in the circuit of Figure 2. The coil of the control electromagnet is herein referred to as the 'control coil'.

Superimposed upon the nominally d.c. output of the amplifier A1 is, in Figure 3, a 20kHz a.c. signal provided by an oscillator 1 connected to the base of the transistor T1 through a capacitor C3. The oscillator 1 and capacitor C3 could alternatively be applied as an input to the amplifier A1. The voltage applied across the control coil comprising L1 and R1 contains therefore a 20kHz component of constant voltage amplitude. The impedance of the control coil varies with the air gap or separation between the electromagnet and object being controlled (not shown), and incremental changes in the air gap caused by incremental changes in the total force upon the suspended object result in a varying 20kHz current component passing through the control coil. An air core transformer M comprises a further or primary coil having an inductance L2 (and an internal resistance not shown) in series with the inductance L1 and resistances R1 and R2, and a secondary coil having an inductance L3 connected in an output circuit to a capacitor C2. The components of the output circuit are chosen so that the circuit is resonant at the frequency of the oscillator 1. The resonant output circuit picks up by mutual induction in the secondary coil of inductance L3 a voltage related only to the 20kHz component of current flowing through the control and primary coils of inductance L1 and L2. Because the amplitude of the applied alternating voltage component is constant, the induced voltage represents a measurement at the applied frequency of the impedance of the control coil and hence any change in the measured induced voltage can be sensed to provide control of the gap between the control electromagnet and controlled object.

The amplitude of the 20kHz component of voltage across the capacitor C2 is detected as follows. The voltage is applied via a resistor R20 providing a high input impedance to one input terminal of an amplifier A5 whose other input terminal is connected via a capacitor C4 through a resistor R22 to earth. A resistor R21 is also connected between the output of the amplifier A5 and the capacitor C4. The circuit comprising the amplifier A5 acts as a buffer to lower the impedance of the transformer output. The peak amplitude at the output of the amplifier A5 is detected by a peak level detector 5 and the detected peak level is compared with a reference voltage V_{REF} in an error detector or difference amplifier 7, the difference being provided as an output. The output signal from the error detector 7 comprising an error signal is integrated by an integrator 9 whose output ramps until the error signal is zero, and the output of the integrator 9 is applied via a potentiometer P6 and a resistor R23 connected to the variable contact of the potentiometer P6 as an input at the input terminal X3 of the amplifier A1.

When the control coil experiences an incremental increase in impedance indicating an incremental decrease in the gap from the control electromagnet to the suspended rotor 5 the control signal applied from the integrator 9 at the terminal X3 is negative so as to increase the gap to its desired mean level to maintain the stable position of the object. Likewise, when the impedance falls a positive control signal is applied at the terminal X3 causing the gap to be reduced. The level of the reference voltage V_{REF} is selected so as to define the required mean stable gap between the control electromagnet and controlled object.

The feedback loop from the transformer M to the input terminal X3 will hereinafter be referred to as "Circuit Q2". The feedback loop comprising the Circuit Q1 is applied in parallel with Circuit Q2 from the control coil to the amplifier A1, the inputs from both feedback loops being applied together at terminal X3 to the amplifier A1.

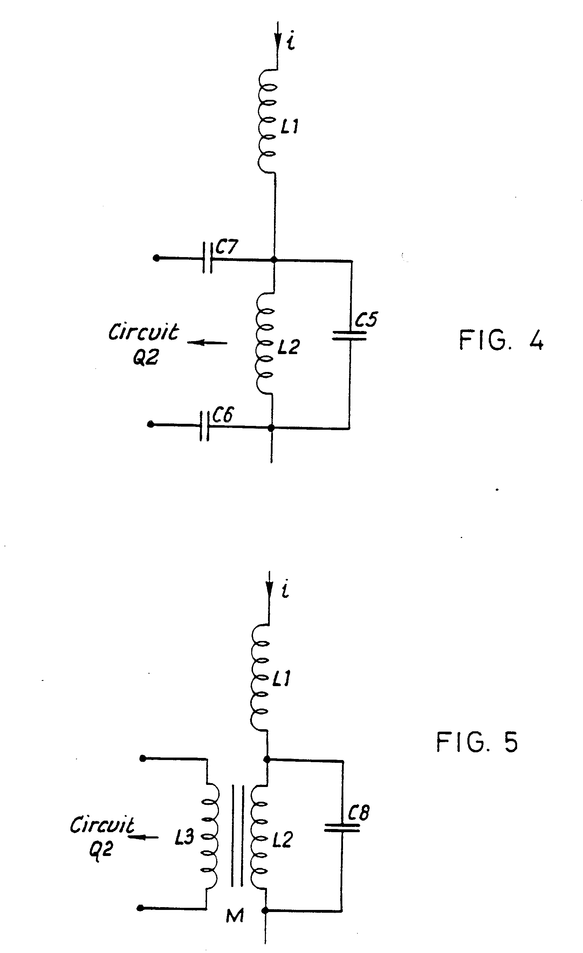

Figures 4 and 5 show alternative ways of deriving the input voltage to the amplifier A5 via resistor R20 in Figure 3.

In Figure 4 the second coil represented by L2 (connected in series with L1) is not part of a transformer but is itself connected to a capacitor C5 selected to give a resonant circuit with the coil L2. The voltage across the terminals of coil L2 is isolated via isolating capacitors C6, C7 and forms the input to Circuit Q2 via resistor R20 and amplifier A5 in the manner shown in Figure 3.

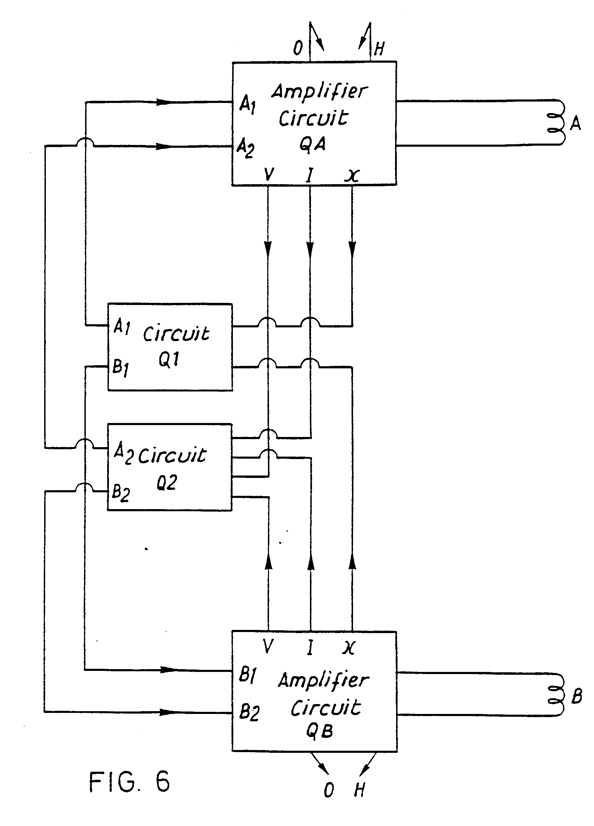

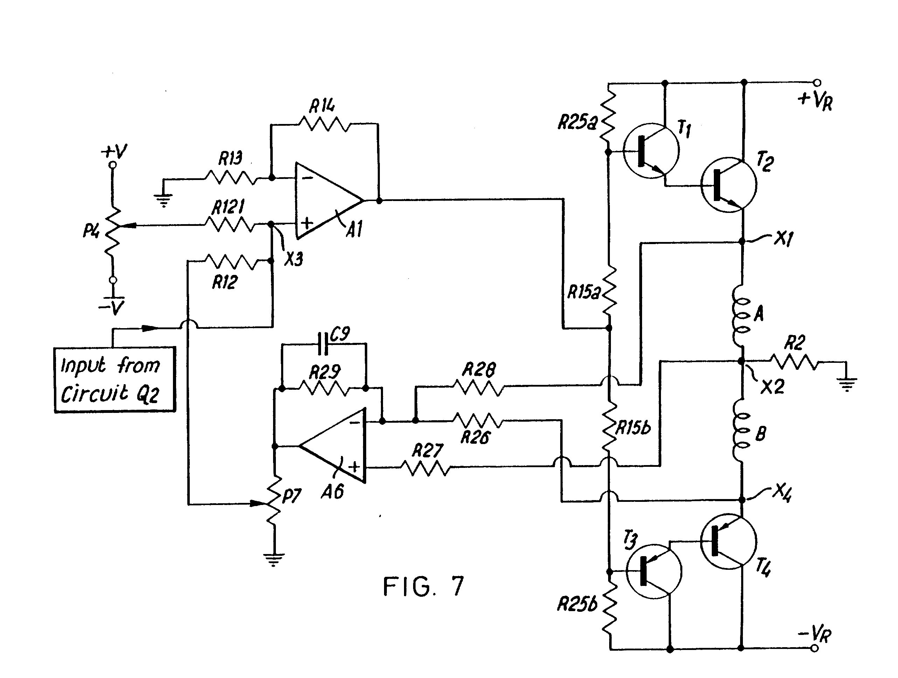

In Figures 4 and 5 and in Figures 6 and 7 which follow the internal resistance of the coils is not shown.

In Figure 5 the second coil represented by L2 (connected in series with L1) is again the primary coil of a transformer M together with a secondary coil represented by L3 but in this case the capacitor, here C8, required for the resonant circuit is connected across the primary coil L2. The voltage across the terminals of coil L3 forms the input to Circuit Q2 via resistor R20 and amplifier A5 in the manner shown in Figure 3.

Figure 6 shows an example of how Circuits Q1 and Q2 may be combined and employed to influence two control coils A, B. The control coils may together form a pair for example mutually controlling in an active bearing the position in one dimension of the axis of the rotor 5. In practice there would be a known spatial arrangement of the coils and the rotor 5 being controlled to permit this. In Figure 6, the amplifier A1 (and its associated input resistances and reference voltage), the transistors T1 and T2, the capacitor C1 and the connections from the coil A to the Circuits Q1 and Q2 are all embodied within an amplifier circuit QA providing input current to the coil A. Likewise, a similar arrangement of components is embodied within an amplifier circuit QB providing input current to the coil B. Variations in the voltage across each coil A, B, indicated in Figure 6 as V and, variations in the current through each coil A, B, indicated as i, are detected respectively by the Circuit Q1 as described above operating jointly upon the two pairs of inputs. Variations in the impedance of each coil A, B indicated in Figure 6 as x (because impedance is measured to control gap x) are detected respectively by the Circuit Q2 as described above operating jointly on the two inputs. An error control signal is generated by the Circuit Q1 in the manner described above with reference to Figure 2, with the additional feature, provided by a logic unit (not shown) within Q1 applied to the output of Q1, that where the output to be applied to the amplifier circuit QA is positive the same error control signal but with a negative sign is applied to the amplifier circuit QB, and vice versa. Likewise, an error control signal is generated by the Circuit Q2 in the manner described above with reference to Figure 3, again with the additional feature that this signal is applied both to the amplifier circuit QA and the amplifier circuit QB except that the sense of the signal applied to QA is positive when that applied to QB is negative and vice versa. The error control signal outputs of the circuit Q1 shown respectively as A1 and B1 in Figure 6 are equal and of opposite sense, as applied to the respective amplifiers of the amplifier circuits QA, QB, so that the incremental changes required to the input current and voltage applied to the respective coils A, B to provide proportional and derivative control of the suspension of the object are equal and opposite. The control signal outputs of the circuit Q2 shown respectively as A₂ and B₂ are equal and of opposite sense, as applied to the respective amplifiers of the amplifier circuits QA, QB so that the incremental electric supply changes required to the respective coils A, B to stabilise the gap between the control electromagnets and the controlled rotor 5 at a selected mean (integral control), are equal and opposite.

In Figure 6, two input connections O and H are shown to the Circuits QA and QB and represent connections respectively to a high current supply and oscillator. These are equivalent to the input from voltage source V_{R} and a.c. from the oscillator 1 in Figure 3.

In another embodiment of the invention (not shown) two further feedback loops each comprising further separate Circuits Q1 may be employed in addition to the joint Circuit Q1 shown in Figure 6 individually to provide independent control of the rate of change of position of the controlled object by the control coils A, B.

In a control system comprising feedback control for a pair of electromagnets there has to be a small bias current flowing in the coils of the electromagnets when there is no mechanical load present. This comes from the square law relationship between Force and Flux. If there were no current, and thus no Flux, the slope of the Force v Flux curve would be zero. Consequently, for small disturbances, there would be no restoring force, ie no stiffness.

The two coils pulling against one another are therefore set up with a bias current, or flux, to produce an operating point for each that is some way up the Force v Flux curve.

For each amplifier (in a system controlling two coils) to operate correctly it is preferred that it has its own independent feedback loop. If this were not the case, the two high gain amplifiers Al would have to be very closely matched so that the very small (approaching zero) inputs would produce equal amplitude but opposite polarity outputs.

Figure 7 shows an alternative circuit in which two control electromagnets represented by their control coils A and B are employed together to provide proportional control of the suspension of an object in one dimension. (In practice the coils A and B would be arranged to face one another with the object in between). In this case from the voltage V across and current i through the coil the parameters V' and i' as defined above are derived in the provision of proportional control.

Coil A is energised by a circuit comprising an amplifier A1 the same as that shown in Figure 2 driving a Darlington pair of transistors T1 and T2 also as in Figure 2 through a resistor R15a. The transistors T1 and T2 are n-p-n transistors. The amplifier Al is again connected to resistors R12, R121, R13 and R14 and resistor R121 is connected to the variable contact of potentiometer P4 all as in Figure 2.

Coil B is energised by the same amplifier circuit comprising the amplifier Al resistors R12, R121, R13 and R14 and potentiometer P4 but in the case of Coil B the amplifier circuit drives a Darlington pair of p-n-p transistors T3 and T4 through a resistor R15b. The parameters V_{L}dt and iR for each of the coils A and B are balanced against each other in the manner described above by a common circuit comprising an operational amplifier A6. The amplifier A6 has one input connected via a resistor R27 from terminal X2 which is a common node between the two coils A, B the terminal X2 also being earthed via a resistor R2. The other input to the amplifier A6 is connected jointly to the input terminal X1 of the coil A through a resistor R28 and the input terminal X4 of the coil B, ie the terminal at which the Coil B is connected to the transistor T4, through a resistor R26. A resistor R29 and capacitor C9 are connected between the output terminal of the amplifier A6 and the input terminal of the amplifier A6 connected to the resistors R26, R28.

A fraction of the signal provided as an output from the amplifier A6 is obtained and employed as an error control signal in a single feedback loop applied at the terminal X3 to the amplifier A1 via the resistor R12 giving proportional control by both coils A and B of the controlled object (not shown) each in an opposite sense in the manner described above. An input from Circuit Q2 (as in Figure 3) may also be applied at the terminal X3.

A resistor R25a is connected between the base of the transistor T1 and the positive voltage rail +V_{R} and, similarly, a resistor R25b is connected between the base of the transistor T3 and the negative voltage rail -V_{R}. The resistors R25a and R25b allow current to be passed from the rail +V_{R} to the rail -V_{R} through resistors R15a and R15b. This develops a voltage across resistors R15a and R15b which causes a bias current to flow through the coils A and B.

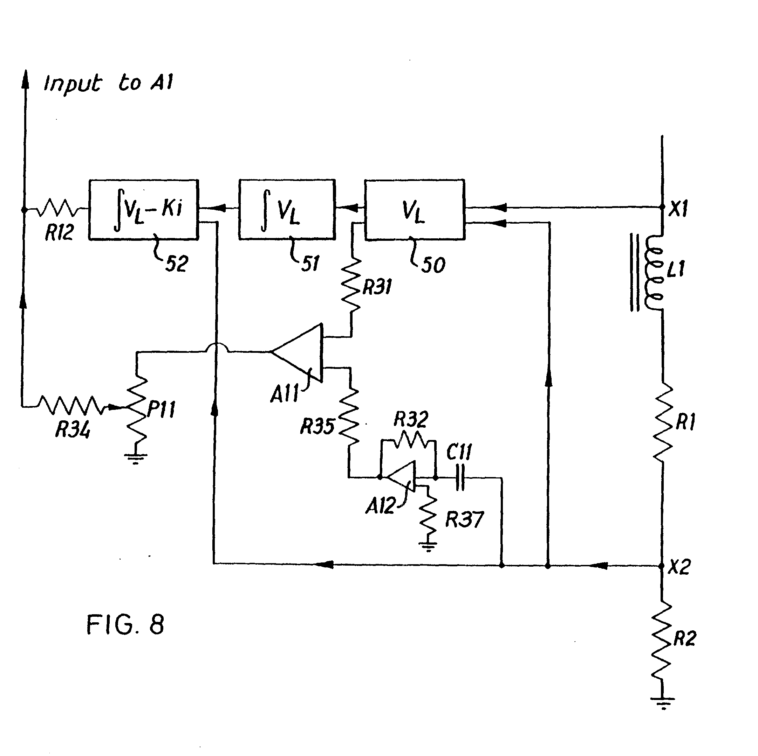

Figure 8 is a circuit diagram of further apparatus embodying the present invention. In this case separate control loops are provided to apply both stiffness and damping control to the oscillations obtained when an object controlled electromagnetically by a single coil experiences a perturbation in the applied force acting upon the object. In Figure 8 the items X1, L1, R1, X2 and R2 are the same as those with the same reference characters shown in Figure 2. Furthermore in Figure 8 part of the feedback loop circuit and sensor components from points X1 and X2 to amplifier Al (via resistor R12) is essentially the same as in Figure 2 but in the case of Figure 8 it is shown in simplified form. Thus, the three parameters derived sequentially by the control signal producer and feedback loop embodied in the circuit of Figure 2, viz the inductive voltage V_{L}, the integral of V_{L} and the integral of V_{L} minus a constant k times current i are represented by the boxes 50, 51, 52 respectively. In addition, the signal representing V_{L} (obtained from amplifier A2 in Figure 2) is applied in Figure 8 via a resistor R31 as one input to an amplifier All the other input to which is the output, applied via a resistor R35, of a differentiator comprising an amplifier A12 having one input applied from the point X2 through a capacitor C11 and the other connected to earth via a resistor R37 and having a resistor R32 connected between the output of the amplifier A12 and its input from the capacitor C11.

The output of the amplifier All is applied to a potentiometer P11 and through a resistor R34 is combined with the signal representing ∫V_{L}dt-ki (output from the amplifier A4 shown in Figure 2) to be-applied via resistor R12 to the amplifier A1 of Figure 2.

The loop deriving ∫V_{L}dt-ki essentially provides stiffness in the oscillations of the suspended object following a perturbation in the force on the object. The loop shown in Figure 8 which is additional to that shown in Figure 2 derives the parameter V_{L}-Kdi/dt, which as explained earlier, provides damping of oscillations caused by perturbations.

## Claims

1. An energy conversion and storage device which comprises a rotor (5) comprising a tubular body portion and a stator (7) comprising one or more electric coils whereby electrical energy may be applied to and extracted from the device when the rotor (5) is rotating relative to the stator (7), the stator (7) being disposed within the rotor (5) co-axially therewith, and means (13,14,15,17) for electromagnetically suspending the rotor (5) whilst rotating relative to the stator (7), wherein the said suspension means includes active electromagnetic bearings (15,17) at least one of which comprises at least one electromagnet comprising an energising coil (L1,R1), which also functions as a control coil for controlling suspension of the rotor (5), and means electrically connected to the control coil (L1,R1) for sensing a parameter related to the position of the rotor (5) and relative to the electromagnet, characterised in that the means for sensing, which does not form a separate transducer, includes means for monitoring voltage across and current through the control coil (L1,R1).

2. A device as in claim 1, and wherein the said means for sensing includes means for monitoring inductance (L1) of the control coil.

3. A device as in claim 1 or claim 2 and wherein the said rotor (5) is formed of a composite of fibre-reinforced material and magnetic material embedded within the fibre-reinforced material.

4. A device as in claim 3 and wherein the said stator (7) extends along at least a major part of the length of the body portion of the rotor (5).

5. A device as in any one of the preceding claims and wherein one or more of the active electromagnetic bearings (15,17) for controlling the suspension of the rotor (5) includes an electromagnet including an inductive control coil (L1), a source (A1,T1,T2) of electric power for the electromagnet which source includes a controllable electric supply device capable of delivering a controlled electric supply to the coil of the electromagnet, a control signal producer (1) for producing an error control signal in response to an incremental change in a parameter related to the position of the rotor (5) relative to the electromagnet (15,17) and a negative feedback control loop for feeding an error control signal generated by the control signal producer to the electric supply device to adjust the electrical supply to the electromagnet (15,17) so as to stabilise the suspension of the object relative to the electromagnet, wherein the said control signal producer includes means (A4) for detecting the component V_{L} of voltage across the coil of the electromagnet which is due to pure inductance L of the electromagnet, means (A2,A3) for detecting the current i flowing through the coil of the electromagnet, means for deriving from the detected value of V_{L} and the detected value of i opposing signals and means for balancing the opposing signals whereby an error control signal generated by the control signal producer represents a deviation from the perfect balance of the said opposing signals and causes a correction signal to be applied by the electrical supply to restore the balance.

6. A device as in any one of the preceding claims and wherein one or more of the active magnetic bearings (15,17) for controlling the suspension of the rotor (5) includes an electromagnet including an inductive control coil (L1,R1), a source of electric power for the electromagnet which source includes a controllable electric supply device capable of delivering a controlled electric supply to the coil of the electromagnet, a control signal producer (1) for producing an error control signal in response to an incremental change in a parameter related to the position of the rotor relative to the electromagnet, and a negative feedback control loop for feeding an error control signal generated by the control signal producer to the electric supply device to adjust the electrical supply to the electromagnet so as to stabilise the suspension of the rotor (5) relative to the electromagnet (15,17) wherein, connected in series with the control coil (L1,R1) of the electromagnet is a second coil (L2,R2) so that in use the same current flows through the control coil and the second coil and a resonant circuit is formed by a capacitor (C2) connected to the second coil (L2,R2) or to a third coil (L3) which is in a mutually inductive relationship with the second coil so that the second and third coils act as the primary (L2) and secondary (L3) coils of a transformer and there is also included means for injecting into the circuit containing the control coil an a.c. signal of constant peak voltage amplitude and having a frequency within the resonance peak of the resonant circuit.

7. A device as in claim 5 or claim 6 and wherein the or each said electromagnet (15,17) is inside the rotor (5).

## Patentansprüche

1. Energiewandlungs- und Speichervorrichtung, die aufweist einen Rotor (5) aufweisend einen rohrförmigen Körperabschnitt und einen Stator (7) aufweisend eine oder mehrere elektrische Spulen, wodurch elektrische Energie an die Vorrichtung angelegt und von der Vorrichtung abgezogen werden kann, wenn der Rotor (5) relativ zu dem Stator (7) sich dreht, wobei der Stator (7) in dem Rotor (5) koaxial mit ihm angeordnet ist, und eine Einrichtung (13, 14, 15, 17) zum elektromagnetischen Aufhängen des Rotors (5), während er sich relativ zu dem Stator (7) dreht, wobei die Aufhängungseinrichtung aktive elektromagnetische Lager (15, 17) aufweist, von denen wenigstens eines wenigstens einen Elektromagnet aufweist, der eine Einschaltspule (L1, R1) aufweist, die auch als eine Steuerspule dient zum Steuern der Aufhängung des Rotors (5), und eine Einrichtung, die elektrisch verbunden ist mit der Steuerspule (L1, R1) zum Messen eines Parameters, der mit der Position des Rotors (5) in Verbindung steht und sich auf den Elektromagnet bezieht, dadurch gekennzeichnet, daß die Einrichtung zur Messung, die nicht einen separaten Wandler bildet, eine Einrichtung aufweist zum Überwachen der Spannung über und des Stroms durch die Steuerspule (L1, R1).

2. Vorrichtung nach Anspruch 1, wobei die Einrichtung zum Messen aufweist eine Einrichtung zum Überwachen der Induktivität (L1) der Steuerspule.

3. Vorrichtung nach Anspruch 1 oder Anspruch 2, wobei der Rotor gebildet ist aus einem Komposit von faserverstärktem Material und magnetischem Material, das in dem faserverstärkten Material eingebettet ist.

4. Vorrichtung nach Anspruch 3, wobei der Stator (7) sich längs wenigstens eines Hauptteils der Länge des Körperabschnitts des Rotors (5) erstreckt.

5. Vorrichtung wie in einem vorangehenden Anspruch und wobei eines oder mehrere der aktiven elektromagnetischen Lager (15, 17) zum Steuern der Aufhängung des Rotors (5) einen Elektromagneten aufweist, der eine induktive Steuerspule (L1) aufweist, eine Quelle (A1, T1, T2) von elektrischer Leistung für den Elektromagneten, welche Quelle eine steuerbare elektrische Versorgungseinrichtung aufweist, die geeignet ist, eine gesteuerte bzw. geregelte elektrische Versorgung an die Spule des Elektromagneten abzugeben, ein Steuersignal-Erzeuger (1) zum Erzeugen eines Fehler-Steuersignals in Reaktion auf eine inkrementelle Änderung in einem Parameter, der auf die Position des Rotors (5) relativ zu dem Elektromagneten (15, 17) bezogen ist, und eine negative Rückkopplungssteuerschleife zum Aufgeben eines Fehlersteuersignals, das erzeugt ist durch den Steuersignal-Erzeuger, an die elektrische Versorgungseinrichtung, um die elektrische Versorgung zu dem Elektromagneten (15, 17) einzustellen, um die Aufhängung des Gegenstands relativ zu dem Elektromagneten zu stabilisieren, wobei der Steuersignal-Erzeuger eine Einrichtung (A4) aufweist zum Erfassen der Komponente V_{L} der Spannung über die Spule des Elektromagneten, die aufgrund der reinen Induktivität L des Elektromagneten vorliegt, eine Einrichtung (A2, A3) zum Erfassen des Stroms i, der durch die Spule des Elektromagneten fließt, eine Einrichtung zum Ableiten ' von dem erfaßten Wert von V_{L} und dem erfaßten Wert von i gegenüberliegende bzw. entgegengesetzte Signale, und eine Einrichtung zum Ausgleichen der gegenüberliegenden Signale, wobei ein Fehlersteuersignal, erzeugt durch den Steuersignal-Erzeuger eine Abweichung von dem vollständigen Ausgleich der entgegengesetzten Signale darstellt und zur Folge hat, daß ein Korrektursignal durch die elektrische Versorgung angelegt wird, um den Ausgleich herbeizuführen.

6. Vorrichtung wie in einem der vorangehenden Ansprüche, wobei eines oder mehrere der aktiven magnetischen Lager (15, 17) zum Steuern der Aufhängung des Rotors (5) einen Elektromagneten aufweist, der eine induktive Steuerspule (L1, R1) aufweist, eine Quelle von elektrischer Leistung für den Elektromagneten, welche Quelle eine steuerbare elektrische Versorgungseinrichtung aufweist, geeignet zur Abgabe einer gesteuerten elektrischen Versorgung an die Spule des Elektromagneten, ein Steuersignal-Erzeuger (1) zum Erzeugen eines Fehlersteuersignals in Reaktion auf eine inkrementelle Änderung in einem Parameter, der mit der Position des Rotors relativ zu dem Elektromagneten in Verbindung steht, und eine negative Rückkopplungssteuerschleife zum Aufgeben eines Fehlersteuersignals, erzeugt durch den Steuersignal-Erzeuger, an die elektrische Versorgungseinrichtung, um die elektrische Versorgung zu dem Elektromagneten so einzustellen, daß die Aufhängung des Rotors (5) relativ zu dem Elektromagneten (15, 17) stabilisiert ist, wobei eine zweite Spule (L2, R2) in Serie mit der Steuerspule (L1, R1) des Elektromagneten geschaltet ist, so daß im Gebrauch derselbe Strom durch die Steuerspule und die zweite Spule schließt, und eine Resonanzschaltung gebildet ist durch einen Kondensator (C2), der verbunden ist mit der zweiten Spule (L2, R2) oder mit einer dritten Spule (L3), die in einer gegenseitig induktiven Beziehung ist mit der zweiten Spule, so daß die zweite und dritte Spule als Primärwicklung (L2) und Sekundärwicklung (L3) eines Transformators wirkt und ferner eingeschlossen ist eine Einrichtung zum Einführen in die Schaltung, die die Steuerspule enthält, eines Wechselstrom-Signals von konstanter Spitzenspannungsamplitude und mit einer Frequenz in der Resonanzspitze der Resonanzschaltung.

7. Vorrichtung nach Anspruch 5 oder Anspruch 6, wobei der oder jeder Elektromagnet (15, 17) sich innerhalb des Rotors (5) befindet.

## Revendications

1. Dispositif de conversion et de stockage d'énergie qui comprend un rotor (5), comportant une partie de corps tubulaire, et un stator (7) comportant un ou plusieurs bobinages électriques, grâce auxquels une énergie électrique peut être appliquée au dispositif et extraite de celui-ci lorsque le rotor (5) tourne par rapport au stator (7), le stator (7) étant disposé à l'intérieur du rotor (5) sur le même axe que celui-ci, et des moyens (13, 14, 15, 17) destinés à suspendre électromagnétiquement le rotor (5) alors qu'il tourne par rapport au stator (7), dans lequel lesdits moyens de suspension comportent des paliers électromagnétiques actifs (15, 17) dont l'un au moins comprend au moins un électroaimant comportant un bobinage d'excitation (L1, R1), qui fait également fonction de bobinage de commande destiné à commander la suspension du rotor (5), et des moyens reliés électriquement au bobinage de commande (L1, R1) afin de détecter un paramètre lié à la position du rotor (5) par rapport à l'électroaimant, caractérisé en ce que les moyens de détection qui ne forment pas un transducteur séparé, comprennent un moyen destiné à surveiller la tension aux bornes du bobinage de commande (L1, R1) et le courant qui le traverse.

2. Dispositif selon la revendication 1, et dans lequel lesdits moyens de détection comprennent un moyen destiné à surveiller l'inductance (L1) du bobinage de commande.

3. Dispositif selon la revendication 1 ou la revendication 2 et dans lequel ledit rotor (5) est formé d'un composite d'un matériau renforcé par des fibres et d'un matériau magnétique noyé à l'intérieur du matériau renforcé par des fibres.

4. Dispositif selon la revendication 3 et dans lequel ledit stator (7) s'étend sur au moins une majeure partie de la longueur de la partie de corps du rotor (5).

5. Dispositif selon l'une quelconque des revendications précédentes et dans lequel un ou plusieurs des paliers électromagnétiques actifs (15, 17) destinés à commander la suspension du rotor (5) comprennent un électroaimant comportant un bobinage de commande inductif (L1), une source (A1, T1, T2) d'énergie électrique pour l'électroaimant, laquelle source comprend un dispositif d'alimentation électrique régulable capable de délivrer une alimentation électrique régulée au bobinage de l'électroaimant, un module de production de signal de commande (1) destiné à produire un signal de limitation d'erreur en réponse à une variation incrémentale d'un paramètre lié à la position du rotor (5) par rapport à l'électroaimant (15, 17), et une boucle de contre-réaction destinée à appliquer un signal de limitation d'erreur, généré par le module de production de signal de commande, au dispositif d'alimentation électrique afin de régler l'alimentation électrique vers l'électroaimant (15, 17) de manière à stabiliser la suspension de l'objet par rapport à l'électroaimant, ledit module de production de signal de commande comprenant un moyen (A4) destiné à détecter la composante V_{L} de la tension aux bornes du bobinage de l'électroaimant, qui est due à l'inductance pure L de l'électroaimant, un moyen (A2, A3) destiné à détecter le courant i circulant à travers le bobinage de l'électroaimant, un moyen destiné à obtenir à partir de la valeur détectée de V_{L} et de la valeur détectée de i des signaux en opposition, et un moyen destiné à équilibrer les signaux en opposition, d'où il résulte qu'un signal de limitation d'erreur, généré par le module de production de signal de commande, représente un écart par rapport à l'équilibre parfait desdits signaux en opposition et amène un signal de correction à être appliqué par l'alimentation électrique pour rétablir l'équilibre.

6. Dispositif selon l'une quelconque des revendications précédentes et dans lequel un ou plusieurs des paliers magnétiques actifs (15, 17) destinés à commander la suspension du rotor (5) comprennent un électroaimant comportant un bobinage de commande inductif (L1, R1), une source d'énergie électrique pour l'électroaimant, laquelle source comprend un dispositif d'alimentation électrique régulable capable de délivrer une alimentation électrique régulée au bobinage de l'électroaimant, un module de production de signal de commande (1) destiné à produire un signal de limitation d'erreur en réponse à une variation incrémentale d'un paramètre lié à la position du rotor par rapport à l'électroaimant, et une boucle de contre-réaction destinée à appliquer un signal de limitation d'erreur, généré par le module de production de signal de commande, au dispositif d'alimentation électrique, afin de régler l'alimentation électrique vers l'électroaimant de manière à stabiliser la suspension du rotor (5) par rapport à l'électroaimant (15, 17), un second bobinage (L2, R2) étant relié en série avec le bobinage de commande (L1, R1) de l'électroaimant de sorte qu'en utilisation, le même courant circule à travers le bobinage de commande et le second bobinage, et un circuit résonnant est formé par un condensateur (C2) relié au second bobinage (L2, R2) ou à un troisième bobinage (L3) qui est en relation mutuellement inductive avec le second bobinage, de sorte que les second et troisième bobinages agissent en tant que bobinages primaire (L2) et secondaire (L3) d'un transformateur et il est inclu également un moyen destiné à injecter dans le circuit contenant le bobinage de commande un signal en courant alternatif à amplitude de tension de crête constante et présentant une fréquence dans les limites du pic de résonance du circuit résonnant.

7. Dispositif selon la revendication 5 ou la revendication 6 et dans lequel ledit électroaimant ou chaque électroaimant (15, 17) est à l'intérieur du rotor (5).
